Europäisches Patentamt

European Patent Office

Office européen des brevets

(11) Publication number: **0 223 060**
A1

(12) **EUROPEAN PATENT APPLICATION**

(21) Application number: 86114186.9

(22) Date of filing: 14.10.86

(51) Int. Cl.⁴: **F 16 D 13/68,** F 16 D 13/62, F 16 D 69/00

(30) Priority: 24.10.85 US 791053

(43) Date of publication of application: 27.05.87 Bulletin 87/22

(84) Designated Contracting States: DE ES FR GB IT

(71) Applicant: Lipe Corporation, 806 Emerson Avenue, Syracuse New York 13201 (US)

(72) Inventor: Wishart, George L., 105 Woodland Dr., North Syracuse, N.Y. 13212 (US)

(74) Representative: Hoeger, Stellrecht & Partner, Uhlandstrasse 14c, D-7000 Stuttgart 1 (DE)

(54) **Damper disc assembly for friction clutches.**

(57) A novel clutch damper disc assembly (11) having an asymmetrical friction pad arrangement (27, 37). The friction pads (37) on the flywheel side of the disc assembly are substantially thicker than the friction pads (27) on the other side of the disc and also are substantially thicker than is conventional. This provides the necessary clearance between the disc assembly (11) and flywheel (10) without the need to counterbore, and at the same time increases the life of the thicker pads. The disc assembly also includes an annular lag spring (22) that provides a higher spring force than can be obtained by conventional multiple finger-type springs.

Damper Disc Assembly for Friction Clutches

Background of the Invention

This invention relates generally to friction clutches, and has particular reference to a novel construction for a friction clutch damper disc assembly.

In heavy duty vehicles, objectionable driveline vibrations may occur at certain speeds and load conditions. Some of these vibrations can be eliminated or reduced to an acceptable level by the incorporation of a torsional damper in the driven disc portion of the vehicle clutch. The damping is usually achieved through use of a plurality of circumferentially spaced coil springs operatively connected between relatively rotatable elements of the clutch driven disc assembly.

While spring dampened driven disc assemblies are desirable for the reason noted above, the springs themselves and the usual spring retainer plates add substantially to the thickness of the central portion of the disc assembly as compared to an assembly that does not have spring damper means. This has created a problem because for clutch damper disc assemblies to be used with conventional vehicle flywheels it is usually necessary to counterbore the flywheel in order to have sufficient clearance between the flywheel and the disc assembly. However, the counterboring operation is burdensome and inconvenient, and is objected to by most flywheel and truck manufacturers. There exists a need, therefore, for a friction clutch damper disc assembly that can be used in conjunction with conventional

0223060

flywheel constructions without the necessity for performing a counterbore operation on the latter.

## Summary of the Invention

To solve the problem indicated, the present invention provides a novel clutch damper disc assembly having an asymmetrical friction pad arrangement. Thus, the friction pads on the flywheel side of the disc assembly are substantially thicker than the friction pads on the other side of the disc and, perhaps more importantly, are substantially thicker than is conventional. This provides the necessary clearance between the disc assembly and flywheel and at the same time increases the life of the thicker pads.

The clearance between the disc assembly and flywheel is also increased due to the fact that the spring retainer plate on the flywheel side of the disc assembly is in direct metal to metal contact with the friction pad support plate instead of being separated therefrom by the usual friction washer. The metal to metal rubbing surface will not show appreciable wear over the life of the clutch but does have a lower friction coefficient and reduced lag torque.

The reduction in lag torque is undesirable but is compensated for by an improved lag spring. This spring is a disc spring that has a higher spring force than the multiple finger type springs of the prior art. In addition, the spring has a novel design that results in reduced assembly time because there are fewer parts to handle.

-2-

Brief Description of the Drawings

Fig. 1 is a fragmentary sectional view of a flywheel and a coacting clutch damper disc assembly having a conventional friction pad arrangement, the disc assembly being shown with the improved disc spring of the invention;

Fig. 2 is a view corresponding to Fig. 1 but showing a damper disc assembly having an asymmetrical friction pad arrangement in accord with the present invention;

Fig. 3 is a fragmentary elevation of the damper disc assembly with parts broken away to better illustrate the details of construction; and

Fig. 4 is a sectional view taken on line 4-4 of Fig. 1.

Description of the Preferred Embodiment

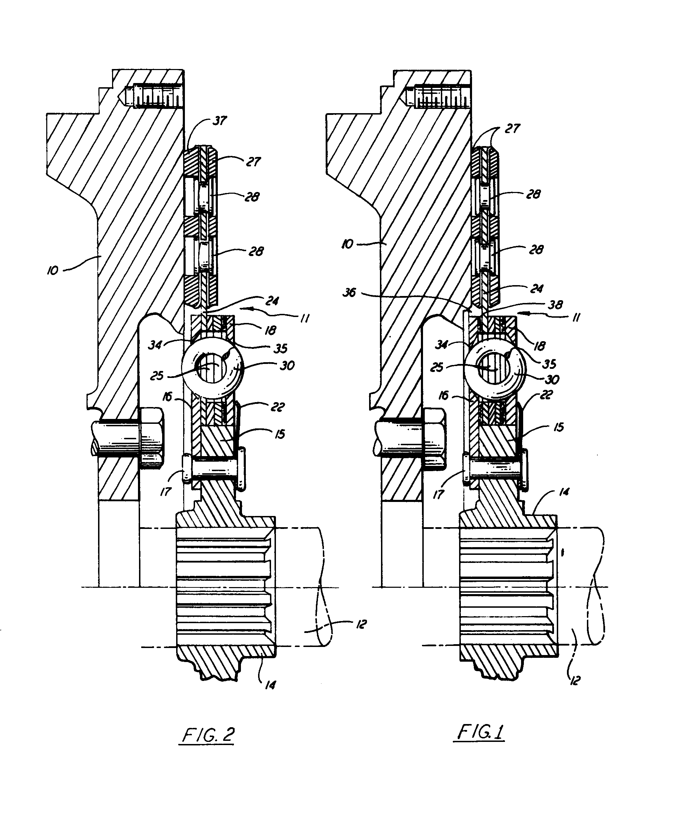

Referring now to the drawings, and with particular reference to Figs. 1 and 2, the clutch assembly includes a driving member in the form of a conventional flat-faced flywheel 10 which is frictionally engaged by a driven disc assembly generally indicated at 11 when the clutch is engaged. The disc assembly in turn drives a driven or output shaft shown in phantom lines at 12. The disc assembly is normally biased into close engagement with the flywheel by a conventional clutch pressure plate (not shown).

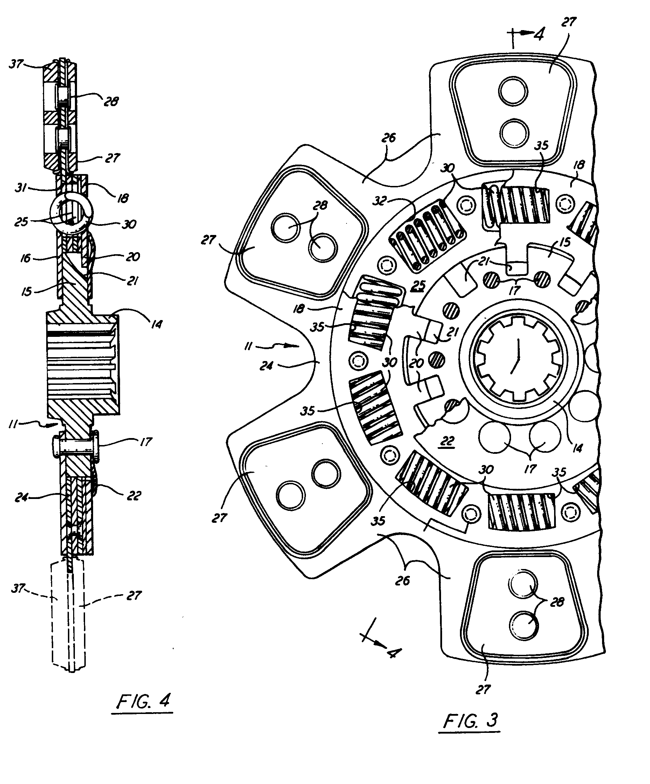

The disc assembly shown is provided with spring damper means to reduce driveline vibrations as noted above. The assembly includes a centrally splined hub 14 that is formed with an

0223060

annular flange 15 that extends radially outwardly from the hub. An annular spring retainer plate 16 is secured to the flywheel side of the hub flange 15 by rivets 17, Figs. 1-3. A second annular spring retainer plate 18 is operatively connected to the hub flange by means of inwardly projecting radial fingers 20 on the plate, Figs. 3 and 4, that are received in mating recesses 21 in the flange. The second retainer plate 18 is retained on the flange 15 by a lag spring 22 to be described. With this construction, the retainer plates rotate with the hub with no relative rotation therebetween.

Positioned between the spaced spring retainer plates 16 and 18 are a friction pad support plate 24 and a pair of annular spacer plates 25. The support plate 24 is formed with integral, radially outwardly extending arms 26, Fig. 3, on which friction pads 27, Fig. 1, are mounted. The pads are secured to the opposite sides of the arms as by rivets 28 and are respectively engaged by the flywheel and pressure plate.

The spring damper means is essentially comprised of a plurality of circumferentially spaced coil springs 30 which operatively connect the support plate 24 with the spring retainer plates 16 and 18 and hub 14. The springs are positioned in registering pockets in the support plate, spacer plates 25 and retainer plates and operate in a well-known manner to dampen objectionable vibrations in the vehicle drive train. The supportable pockets are shown at 31 in Fig. 4, the spacer plate pockets are shown at 32 in Fig. 3, and the retainer plate pockets are shown at 34 and 35 in Figs. 1-3. As will be apparent from

-4-

the drawings, the retainer plates serve to retain the springs in the pockets due to the fact that the width of pockets 34 and 35 is less than the diameter of the springs.

As can be seen from Fig. 1, the damper springs 30 and their supporting structure result in the disc assembly having a relatively thick central portion as compared to an assembly that does not have spring damper means. Therefore, when spring dampened disc assemblies are employed in a vehicle it is frequently necessary to counterbore the flywheel as shown at 36 in Fig. 1 to prevent interference between the flywheel face and the outer edge of the disc assembly retainer plate 16. This operation is burdensome and inconvenient and is strongly objected to by most original equipment manufacturers.

The present invention enables spring dampened disc assemblies to be utilized without requiring the onerous counterbore operation. This objection is achieved by means of an asymmetrical friction pad arrangement as shown in Fig. 2. Thus, the friction pad 37 on the flywheel side of the support plate 24 is substantially thicker than is conventional and in the embodiment shown is approximately twice the thickness of the conventional friction pad 27. This relatively simple but unique construction provides a safe clearance between the flywheel face and outer edge of the spring retainer plate 16 even after the thickness of the pad 37 has been reduced due to wear. By providing this clearance, proper engagement of the friction pads with the flywheel is insured.

The clearance between the disc assembly and flywheel is also increased by eliminating the friction washer 38, Fig. 1, that is usually positioned between the spring retainer plate 16 and the support plate 24. Thus, in accord with the invention, the plates 16 and 24 are in direct metal to metal contact as shown in Fig. 2. The metal to metal rubbing surface will not show appreciable wear over the life of the clutch but does have a lower coefficient of friction with a resulting reduction in lag torque.

The reduction in lag torque is undesirable but is compensated for by the improved lag spring 22. This spring as best shown in Figs. 3 and 4 is annular and is secured to the hub flange 15 by the same rivets 17 that secure the spring retainer 16 to the flange. In cross section, spring 22 has a reverse curve configuration whereby its outer edge engages and exerts a compressive force upon the spring retainer plate 18 to compensate for wear in the spring damper means. Because of its annular shape and cross sectional configuration, the lag spring has a higher spring force than the multiple finger-type springs of the prior art and also applies force more uniformly.

From the foregoing description, it will be apparent that the invention provides a novel and advantageous damper disc assembly for friction clutches. As will be understood by those familiar with the art, the invention may be embodied in other specific forms without departing from the spirit or essential characteristics thereof.

I Claim:

1. In a friction clutch for connecting an engine flywheel to a driven shaft: a driven disc assembly comprising in combination a central hub mounted on the driven shaft for rotation therewith, the disc assembly being axially movable · relative to the shaft and being urged toward frictional engagement with the flywheel, friction pad support plate, spring damper means operatively connecting the support plate to the central hub, the spring damper means causing the disc assembly to be thickened adjacent the central portion thereof, and friction pads on opposite sides of the support plate adjacent the periphery thereof, the friction pads on the flywheel side of the plate being substantially thicker than the friction pads on the other side of the plate to provide increased clearance between the central portion of the disc assembly and the flywheel.

2. A friction clutch as defined in claim 1 wherein the central hub of the disc assembly has an integral annular flange extending radially outwardly therefrom, the spring damper means including a pair of spring retainer plates operatively connected to said annular flange.

3. A friction clutch as defined in claim 2 together with an annular disc spring secured to the central hub of the disc assembly, the peripheral edge of the disc spring overlying and exerting a compressive force on one of the spring retainer plates to compensate for wear in the spring damper means.

4. In a friction clutch for connecting an engine flywheel to a driven shaft: a driven disc assembly comprising in combination a central hub mounted on the driven shaft for rotation therewith, the hub being axially movable on the shaft whereby the disc assembly is movable into frictional engagement with the flywheel to effect a driving connection between the latter and the shaft, the central hub having an integral annular flange extending radially outwardly therefrom, a friction pad support plate, spring damper means operatively connecting the support plate to the central hub, the spring damper means including a pair of spring retainer plates operatively connected to the annular flange at opposite sides thereof, the spring damper means causing the disc assembly to be thickened adjacent the central portion thereof, and friction pads on opposite sides of the support plate adjacent the periphery thereof, the friction pads on the side of the support plate facing the flywheel being substantially thicker than the friction pads on the other side of the plate to provide increased clearance between the disc assembly and the flywheel.

5. A friction clutch as defined in claim 4 together with a unitary annular disc spring secured to the central hub of the disc assembly, the peripheral edge of the disc spring overlying and exerting a compressive force on one of the spring retainer plates to compensate for wear in the spring damper means.

6. A friction clutch as defined in claim 4 wherein the support plate and the spring retainer plate on the flywheel side of the disc assembly are in direct metal to metal contact with one another.

7. For use with a friction clutch driven disc assembly having spring damper means, the driven disc assembly including a hub formed with an outwardly extending annular flange, the spring damper means including a pair of spring retainer plates operatively connected to the annular flange at opposite sides thereof; a unitary annular disc spring secured adjacent its inner edge to hub flange, the disc spring being formed so that its outer circular edge continuously contacts and exerts a compressive force upon one of the spring retainer plates to compensate for wear in the spring damper means.

8. A disc spring as defined in claim 7 wherein the disc spring has a reverse curve configuration in cross section, the spring adjacent its outer edge being bent inwardly into engagement with said one spring retainer plate.

FIG. 2

FIG. 1

FIG. 4

FIG. 3

**European Patent Office**

**EUROPEAN SEARCH REPORT**

Application number

EP 86 11 4186

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 509 400 (LUK GmbH) <br> * Page 5; figure 2 * | 1-5,7 | F 16 D 13/68 <br> F 16 D 13/62 <br> F 16 D 69/00 |
| A | US-A-4 093 054 (M.D. JOHNS) <br><br> * Columns 2,3; figure 2 * | 1,2,4, 6 | |
| A | DE-B-1 119 130 (FICHTEL & SACHS) | | |
| A | GB-A- 539 872 (BORG & BECK) | | |
| A | US-A-1 883 682 (D.E. GAMBLE) | | |

TECHNICAL FIELDS
SEARCHED (Int. Cl.4)

F 16 D

The present search report has been drawn up for all claims

| Place of search | Date of completion of the search | Examiner |
|---|---|---|
| THE HAGUE | 03-02-1987 | BEGUIN C.P. |